(19) Europäisches Patentamt
European Patent Office
Office européen des brevets

(11) **EP 4 201 570 A1**

(12) **EUROPEAN PATENT APPLICATION**

(43) Date of publication:
**28.06.2023  Bulletin 2023/26**

(21) Application number: **21217224.1**

(22) Date of filing: **23.12.2021**

(51) International Patent Classification (IPC):
**B23H 7/04** $^{(2006.01)}$

(52) Cooperative Patent Classification (CPC):
**B23H 7/04**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Agie Charmilles SA
6616 Losone (CH)**

(72) Inventors:
• **Boccadoro, Marco
  6653 Verscio (CH)**
• **D'Amario, Rino
  6806 Sigirino (CH)**

(74) Representative: **Li Schrag, Yue
Georg Fischer AG
Amsler-Laffon-Strasse 9
8201 Schaffhausen (CH)**

(54) **METHOD AND DEVICE FOR ELECTRICAL DISCHARGE MACHINING**

(57)  The invention relates to a method and device for wire electrical discharge machining (WEDM), in which a first voltage UCH1 is measured between a first current feeder and the workpiece, and a second voltage $U_{CH2}$ is measured between a second current feeder the workpiece, whereas said first- and second voltage $U_{CH1}$, $U_{CH2}$ are measured when current of the machining discharge pulse is zero, for instance at the end of the of the machining discharge current pulse, and a voltage difference of said measured voltages $\Delta U_{CH} = U_{CH1} - U_{CH2}$ is determined, and a discharge position of said machining discharge pulse is determined in real time, as a function of said voltage difference $\Delta U_{CH}$.

**Fig. 6a**

Bottom discharge

I  U

$\Delta U_{CH}$

I=0

**Description**

The present invention refers to a method for the control of a wire electrical discharge machining process, in particular to a method to detect the discharge position in a wire electrical discharge machining process.

Background and prior art

The wire electrical discharge machining process (referred to as WEDM) is versatile and extremely accurate. A desired contour is cut in a workpiece by means of a wire electrode (wire) . Wire and workpiece are moved relatively to each other according to the instructions of a machining program. The process is conducted by applying a voltage to the gap between the workpiece and the wire. The workpiece material is removed by the action of electrical discharge pulses also referred to as discharges, sparks, or pulses.

Wire electrical discharge machines are provided with a range of monitoring signals, in particular electrical process monitoring signals. Such monitoring signals include e.g. breakdown detection, monitoring of the burning voltage level, detection of open voltage condition, etc. which are fundamental for the control of the EDM process.

Some 45 years ago, in patent application publication JPS5364899A, Dr. Kiyoshi Inoue disclosed the basic thought of how to detect the position of a discharge along the engagement line of wire and workpiece by using electrical discharge pulse signals. The position at which the discharges occur along the engagement line of wire and workpiece can be computed on the base of partial currents fed through an upper- and a lower current feeding branch. For instance, CH653585A5 discloses a method to compute the distance Z of an electric discharge along the portion of the wire electrode in the machining zone between the electrode wire and the workpiece. Said distance is indicated from the center point between the current feeding contacts. The method includes subtracting and adding the intensities of the currents flowing respectively in each of an upper and a lower line, in the course of each electrical discharge, and a circuit for obtaining a value proportional to the quotient of the subtraction by the addition.

Recently, GF Machining Solutions has presented two applications, which make use of the discharge position detection. One is the "iSPS"; a process control method, which monitors the overall spark distribution in real time, and reduces the pulse energy if the spark density at any position exceeds certain thresholds (see EP3446820A). Another application is "iWire"; here a wearing model of the wire is generated in real time by determining the position and size of the craters on the traveling wire, and the wire traveling speed is adjusted according to the comparison of the actual wire wearing model and a wire wearing limit (see EP3834977A1).

Further uses of the discharge position detection include:

- Detecting a succession of discharges at the same position (a.k.a. concentrated discharges, localization), and taking countermeasures to prevent wire breaking and damages to the workpiece;
- Monitoring the heating of the wire to prevent wire breaking;
- Monitoring the number of discharges at different sectors of the machining zone, and inferring the machining shape based on the distribution of discharges;
- Enhancing machining accuracy, by detecting discharge position and by actively controlling discharge pulse energy accordingly;
- Actively controlling the discharge to occur at a desired position, by detecting the discharge position in real time and stopping a current pulse for a predetermined time when the discharge position reaches a pre-set position;
- Actively controlling the discharge to occur at a desired position, by detecting the position of a first discharge and decide in real time, whether an additional discharge immediately following the first discharge shall be applied, reduced or not applied at all;
- Detecting the position of the actual discharge pulse and applying pre-set machining parameters to specific portions of the work piece height, by selecting a discharge condition according to a detecting position;
- Detecting the workpiece thickness and shape, in-process, and adjust process conditions accordingly;
- Detecting the misalignment of the wire with respect to the workpiece;
- Increasing the machining speed by actively controlling the occurrence of concentrated discharges.

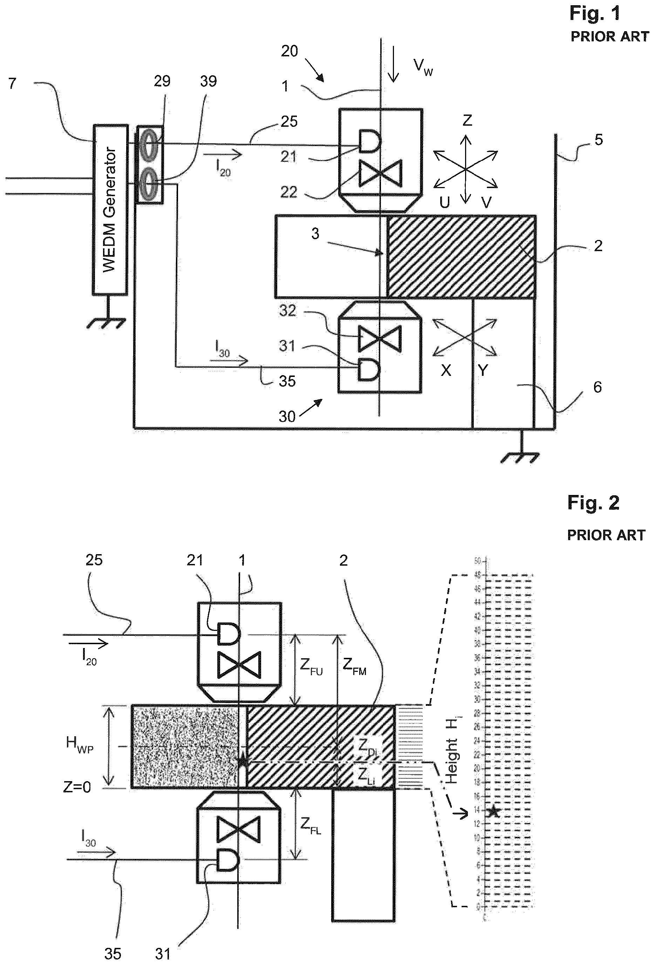

The method generally used to infer the discharge position according to prior art is based on the measurement of the currents flowing through an upper and a lower current feeding branch. The partial discharge currents I20 and 130 flowing to the wire through the upper feeding path and lower feeding path are measured separately, for instance using toroidal current transformers 29, 39, as shown in figure 1. Toroidal current transformers make contactless sensing of the current possible. The current signals 120, 130 flowing through upper and lower feeder are compared by a differential current amplifier; the current difference signal is associated to a discharge position.

This method is quite intuitive, but has a number of drawbacks:

- The splitting of the current in the upper and lower current feeding branches (the connections between generator and wire electrode, a.k.a. current cables or electrode cables) occurs as a function of the respective total impedances. This means that any change in the inductance of the electrode cable, e.g. by displacing the axes, reflects in an inaccuracy of the position detection of the discharge. In addition, for every size and topology of machine the symmetry of the upper and lower current feeding branches is different, therefore complex calibrations are needed;
- The hardware needed to measure currents up to 1000A in real-time, which can be expensive;
- The state of the art in the electronics technology is to preferably acquire and process voltages, and converting them to digital information as soon as this is possible, not to acquire currents;
- The pulses used in WEDM machining are typically very high and narrow, and measuring and subtracting them is necessarily performed in a very noisy environment from the electromagnetic point of view;
- Subtracting the currents works only if the current amplitudes are large enough, precluding the application of this method for the trim cuts.

From the above, it is obvious that an improved method for the detection is highly desirable. The present invention eliminates the drawbacks of prior art solutions, by radically changing the measuring approach. This provides a reliable and stable measure platform that delivers the precise information about the position of the discharges.

Summary of the invention

**A first object** of the present invention is to provide an improved method for the determination of the position of the discharges along the engagement line of the wire electrode and the workpiece, in particular a discharge position detection method being more accurate and reliable than current art methods.

This object is achieved by determining the difference between the voltage measured at the upper current feeder and the voltage measured at the lower current feeder at the ideal moment, i.e. at the end of the current pulse, where the current is zero, the voltage signal is at the maximum and the electromagnetic emissions are minimized, then the discharge position is inferred based on said voltage difference.

**A second object** of the present invention is to reduce the cost and effort for the discharge position detection.

Further aspects are set forth in the dependent claims, the following description and the drawings. Other features are inherent in the methods and products disclosed or will become apparent to those skilled in the art from the following detailed description and the figures.

Description of preferred embodiments of the invention

Preferred embodiments of the invention will now be detailed with reference to the attached drawings, in which

FIG.1        is a sketch of the machining area of a WEDM, with a prior art discharge position detection circuit;
FIG.2        is a known discharge position discretization scheme;
FIG.3a,b     are sketches of the machining area of a WEDM, with a discharge position detection circuit, according to the invention;
FIG.4a,b     are circuit models of a discharge position detection circuit according to the invention;
FIG.5a,b     are signals for the voltage measurement;
FIG.5c       is a plot of machining currents i1 and i2;
FIG.5d       is a plot of a plurality of measured voltage signals at different discharge positions;
FIG.6a,b     are digital oscilloscope acquisitions of the current of a machining discharge pulse, and the voltage according to the discharge position;
FIG.7a,b     7a is a comb-shaped workpiece generating the waveforms of 7b which shows a digital oscilloscope measurement of the voltage in persistence mode;
FIG.8        is a plot of an upper- and a lower machining discharge pulse current, i1 and i2;
FIG.9        is a functional diagram showing the principle of signal acquisition and processing;
FIG.10a,b    is an exemplary calibration method for the discharge position detection system;
FIG.11       is a graph illustrating the relation between the wire self-inductance and the wire segment length.

Figure 1 shows the machining area of a wire electrical discharge machine of the prior art. A workpiece 2 is mounted on a table 6 in a worktank 5 filled with a dielectric machining fluid (not shown). The workpiece 2 is cut by means of a wire electrode 1, which is precisely guided by means of wire guides 22, 23. The wire guides are located in the upper- and the lower wire guiding head 20, 30. Wire guiding heads 20, 30 further include an upper- and a lower current feeder 21, 22. An upper- and a lower electrode cable 25, 35 connects the generator to the upper- and lower current feeder 21, 31. In operation, the wire electrode 1 slides on the current feeders 21, 22 while the machining current pulses are carried to the wire. The discharges occur in the gap 3, along the engagement line of wire 1 and workpiece 2.

According to the prior art, as discussed e.g. in EP3446820A1 the partial discharge currents 120, 130 flowing to the wire through the upper- and lower feeding path are measured separately using toroidal current transformers 29, 39.

The discharge position referred to a position at half distance $Z_{FM}$ between the current feeders 21, 31 is proportional to the difference of the partial discharge currents. More specifically, the difference of partial discharge current signals (120-130), divided by the total discharge current (120+130), multiplied by the half distance between the current feeders $(Z_{FU}+H_{WP}+Z_{FL})/2$ determines the discharge position $Z_{Di}$ of each discharge Di occurring along an engagement line of the wire and the workpiece, from the midpoint between the current feeders. The location of discharges is discretized for further processing. Figure 2 shows a discretization scheme in which the workpiece height is divided into a discrete number of sections, and the detected discharge positions are assigned to the respective section, as known in the art.

As mentioned previously, the method of partial currents flowing in an upper- and a lower current feeding branch has a number of disadvantages. Therefore, the object of the invention is to provide an improved discharge position detection method.

In the wire electrical discharge machining method according to the invention, a preliminary voltage pulse is applied to a gap between a wire electrode and a workpiece, and, at the breakdown of said preliminary voltage pulse, a machining discharge pulse is applied to the wire electrode, characterized in that, a first voltage $U_{CH1}$ is measured between a first current feeder and the workpiece, and a second voltage $U_{CH2}$ is measured between a second current feeder and the workpiece, whereas said first voltage $U_{CH1}$ and said second voltage $U_{CH2}$ are measured when current of the machining discharge pulse is zero and the voltage difference $\Delta U_{CH} = U_{CH1} - U_{CH2}$ of said first- and said second measured voltage is determined, and a discharge position of said machining discharge pulse along the engagement line of the wire electrode and the workpiece is determined in real time, as a function of said voltage difference $\Delta U_{CH}$.

For instance, the first current feeder is upper current feeder, and the second current feeder is the lower current feeder, or vice versa. In this way, the voltage between the wire electrode and the workpiece is measured, in both, the upper- and the lower contact position.

According to an embodiment, the voltage is measured at the beginning of a machining discharge pulse, and/or at the end of a machining discharge pulse, when current of the machining discharge pulse is zero.

The method according to the invention will now be presented in detail. At the beginning, a preliminary voltage pulse is applied to a gap between a wire electrode and a workpiece, whereby the gap is ionized, and a breakdown is generated. A machining discharge pulse is applied immediately after the breakdown.

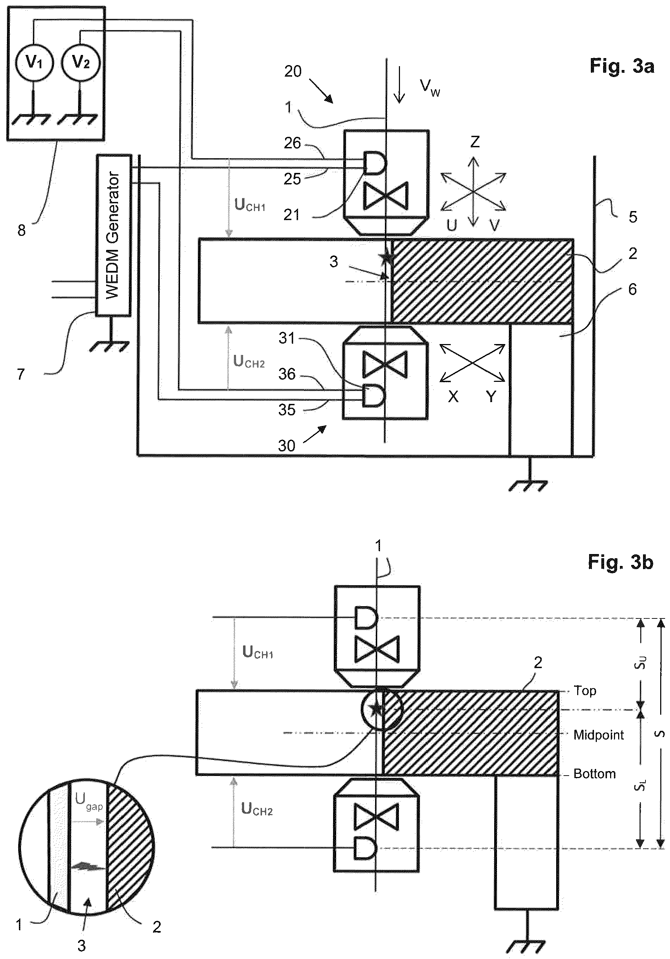

The first voltage $U_{CH1}$, between the upper current feeder and the workpiece, and the second voltage $U_{CH2}$, between the lower current feeder and the workpiece are measured when the discharge current is zero, and their difference $\Delta U_{CH} = U_{CH1} - U_{CH2}$ is determined. The discharge position of said machining discharge pulse is computed based on said difference $\Delta U_{CH}$. Figure 3a,b illustrates the machining area of a WEDM, with a voltage measurement means for the measurement of the voltages $U_{CH1}$ and $U_{CH2}$, used by the discharge position detection circuit according to the invention.

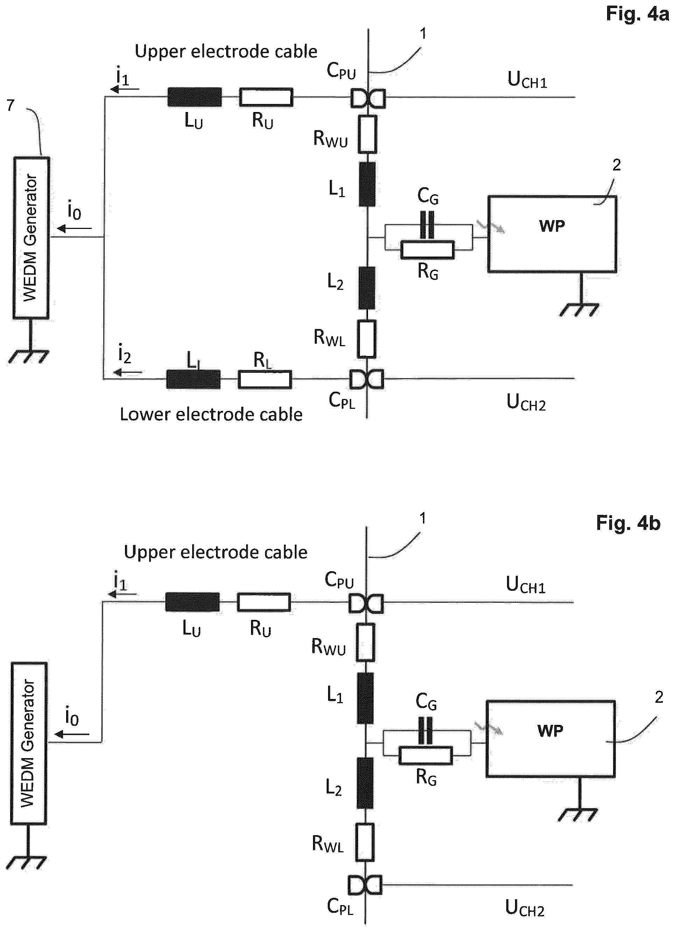

Referring now to figure 4a, there is shown a circuit model of a first embodiment, illustrating the current path between the generator of the WEDM and the wire electrode. In this embodiment, the machining discharge pulses are provided to the wire by both, the upper electrode cable (25) and lower electrode cable (35). In general, one or more upper- and lower electrode cables connect the generator 7 to the upper current feeder $C_{PU}$ and to the lower current feeder $C_{PL}$. The arrows of currents $i_0$, $i_1$ and $i_2$ point towards the generator since usually the workpiece is polarized positively and the wire electrode negatively. For simplicity, when illustrating the formulas for $U_{CH1}$ and $U_{CH2}$ a reverse polarity is assumed (wire positive and workpiece negative).

$L_U$ and $L_L$ are respectively the upper- and lower electrode cable inductances; Ru and $R_L$ represent the upper- and lower electrode cable resistances respectively including the resistance of the current feeder $C_{PU}$, $C_{PL}$.

As explained above with reference to the prior art, the influence of inductances and resistances $L_U$, $R_U$, $L_L$, $R_L$ must be taken into account when measuring the partial currents i1 and i2. Therefore, any change in these values affects the measurement, making it unreliable, e.g. when machining at different positions of the worktable.

As shown in figure 3b, $s_U$ is the partial wire segment length between the discharge location and the upper current feeder $C_{PU}$, and and $s_L$ is the partial wire segment between the discharge location and the lower current feeder $C_{PL}$. $R_{WU}$ and $R_{WL}$ are the partial wire segment resistances, $L_1$ and $L_2$ are the partial wire segment inductances above and underneath the discharge location. $U_{CH1}$ and $U_{CH2}$ are respectively the voltages measured at the upper and lower current feeder with respect to the ground.

During the discharge, the gap voltage $U_{Gap}$ between the wire and the workpiece is typically 25-30 V. This voltage is the discharge voltage or burning voltage. The gap voltage is independent from the discharge location; the gap voltage must be eliminated in order to get the relevant voltage $\Delta U_{CH}$ for the determination of the discharge position.

The following formulas yield both voltages:

$$U_{CH1} = i1 * R_{WU} + L_1 * di_1/dt + U_{Gap} \qquad ①$$

$$U_{CH2} = i2 * R_{WL} + L_2 * di_2/dt + U_{Gap} \qquad ②$$

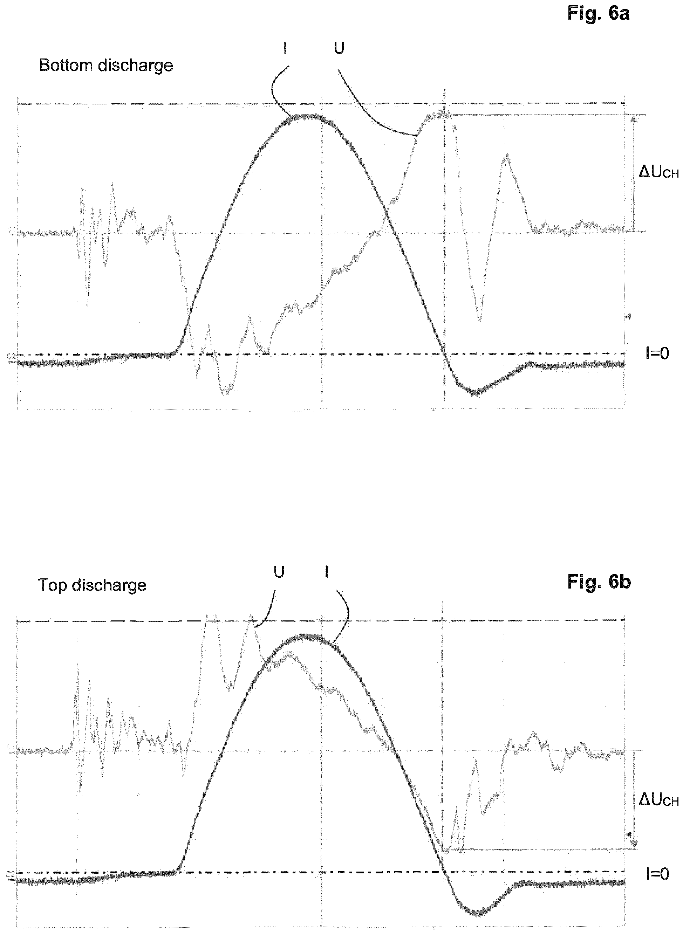

According to the invention disclosed herein, the voltage is sampled exactly, with typically 50ns accuracy at the time where the discharge pulse current is zero, as shown e.g. in figures 6a, 6b. In other words, the voltage must sampled pretty much exactly at the detection of the zero pulse current. For the avoidance of doubts, the wording "the first voltage $U_{CH1}$ and the second voltage $U_{CH2}$ are measured when current of the machining discharge pulse is zero" includes a voltage measurement in which the current is nearly zero, i.e. within the required accuracy.

In this way, the resistive voltage drop caused by the current on the wire segment is zero. Above formulas ① and ② are thus simplified:

$$U_{CH1} = L_1 * di_1/dt + U_{Gap} \qquad ③$$

$$U_{CH2} = L_2 * di_2/dt + U_{Gap} \qquad ④$$

Moreover, their difference is:

$$\Delta U_{CH} = L_1 * di_1/dt - L_2 * di_2/dt \qquad ⑤$$

One sees that both voltages $U_{CH1}$, $U_{CH2}$ depend on the derivative of the current $di_1/dt$, $di_2/dt$ and on the partial wire inductances $L_1$, $L_2$.

Moreover, the voltages $U_{CH1}$ and $U_{CH2}$ are measured at the current feeders, so that the impedance of the cabling from the generator to the current feeders is now irrelevant.

These aspects are now illustrated again with reference to the circuit model shown in figure 4a. By measuring the voltages $U_{CH1}$ and $U_{CH2}$ at the current feeders, the electrode cables 25, 35 are by-passed; only the relevant part of the circuit is measured. Moreover, by measuring at zero discharge pulse current, the partial wire segment resistances Rwu and $R_{WL}$ have no effect to the voltages $U_{CH1}$ and $U_{CH2}$. Lastly, the measured channel voltages, respectively the first voltage and the second voltage $U_{CH1}$ and $U_{CH2}$ are subtracted from each other, so that the voltage difference $\Delta U_{CH}$ is not affected by the gap voltage $U_{Gap}$.

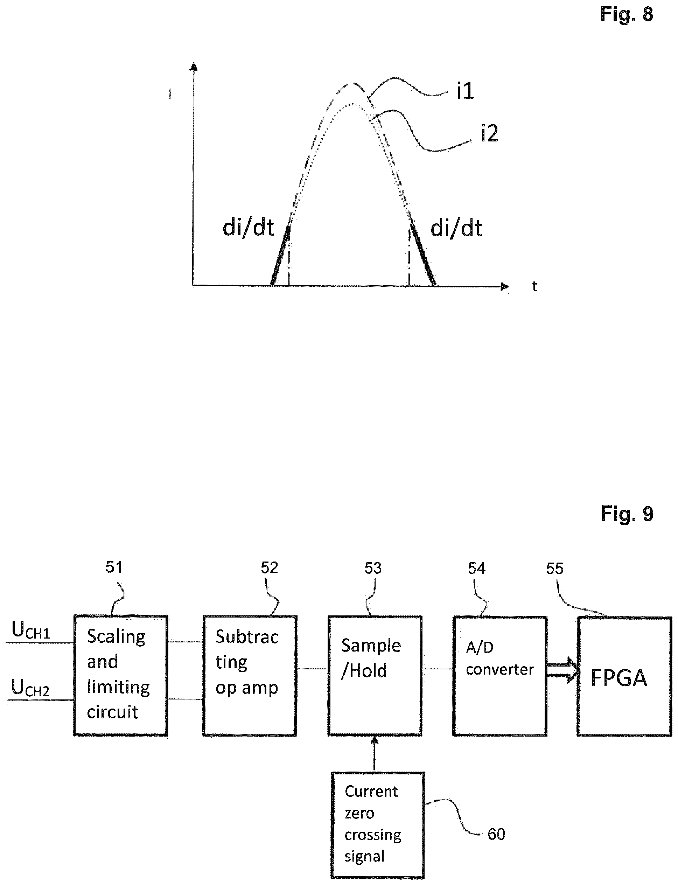

In summary, the voltage difference $\Delta U_{CH}$ is only determined by the partial wire segment inductances $L_1$ and $L_2$, and the derivatives of the discharge pulse currents $di_1/dt$, $di_2/dt$. Moreover, in practice the current difference $I_1$, $I_2$ between the upper and lower paths only minimally affects the derivative of the current. Figure 8 shows exemplary capacitive discharge pulse waveforms of different upper- and lower currents, i1 and i2. The derivative di/dt is only slightly affected by the difference of the discharge currents i1 and i2. This means, that the voltage difference $\Delta U_{CH}$ is mainly determined by the partial wire segment inductances $L_1$ and $L_2$.

$\Delta U_{CH}$ contains the information regarding the exact discharge location: The inductance $L_1$ of the partial wire segment between the upper current feeder and the discharge position, and the inductance $L_2$ of the partial wire segment between the lower current feeder and the discharge position are a function of the respective partial wire segment lengths su and $S_L$, from the upper-, respectively the lower current feeder to the discharge location.

According to Rosa, E.B. (1908). "The self and mutual inductances of linear conductors". Bulletin of the Bureau of Standards. U.S. Bureau of Standards. 4 (2): 301 ff. doi:10.6028/bulletin.088, the relation between self-inductance L of a straight wire and the wire segment length is approximately:

$$L = k * s * [\ln(2*s/r) - 1] \qquad ⑥$$

Where k = 200 nH/m; r = wire radius in meters; s = relevant wire segment length in meters, e.g. the upper wire segment length su; L = wire inductance in nH.

The formula ⑥ shown above is transcendental and cannot be solved easily in real time. However, lookup tables can be used to link the wire segment length to the self-inductance L. Such lookup tables can be calculated in advance for the relevant of wire electrode diameters and with the required step size. The lookup tables can be stored e.g. in a fast memory, for real time access. Lookup tables are practical to discretize the detected discharge position, in view of a further use, e.g. for discharge position monitoring purposes or for discharge position control.

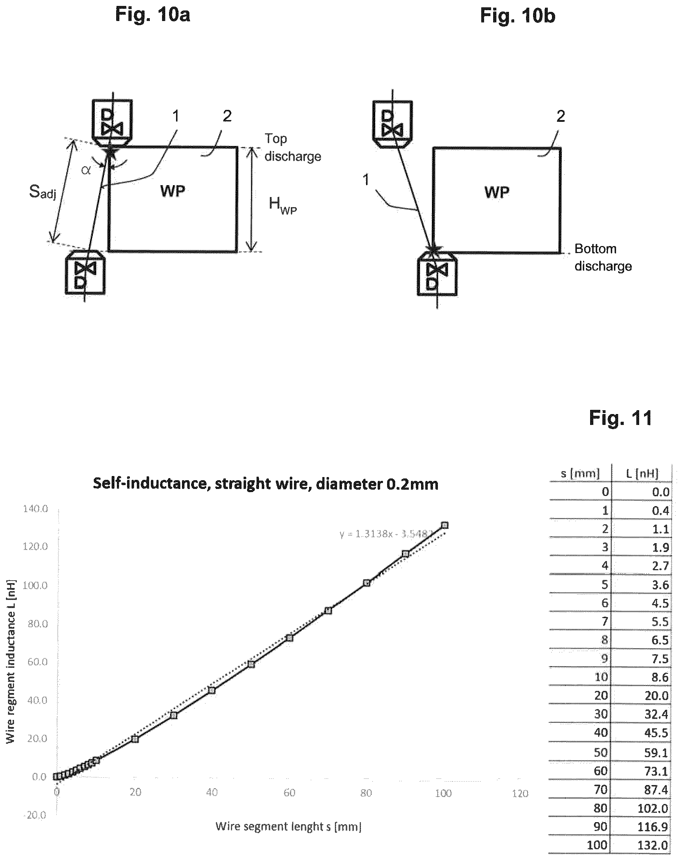

Moreover, the above formula ⑥ can be linearized to find the approximate wire segment length s, as exemplarily shown in Figure 11 for a wire having diameter 0.2 mm:

$$L = 1.3138*s - 3.5483$$

$$s = (L+3.5483) / 1.3138$$

(e.g. using a simple linear interpolation)

Where s = wire segment length in meters, L = wire inductance in nH.

This is meant to show that the voltage, and hence the voltage difference, contains the information about the wire segment lengths. However, the present invention proposes a simpler method to directly find the wire segment length starting from the voltage difference. This will become clearer later.

Even for smaller currents, the derivatives $di_1/dt$ and $di_2/dt$ are quite large, since in order to achieve high quality results the WEDM machining pulses must be as narrow and steep as possible. Therefore, the measure is reliable not only for the main cut, but also for the trim cuts.

The relevant theory, i.e. self-induction is now illustrated with reference to figures 6a and 6b, which show digital storage oscilloscope (DSO) acquisitions of the current of a machining discharge pulse, and the voltage difference $\Delta U_{CH}$ according to the discharge position, for a particular discharge occurring respectively at the top of the workpiece and at the bottom thereof.

In detail, figure 6a shows the course of the channel voltage difference $\Delta U_{CH}$, when the discharge occurs at the bottom of the engagement line of wire and workpiece. Further, figure 6b shows the course of the channel voltage difference $\Delta U_{CH}$, when the discharge occurs at the top of the engagement line of wire and workpiece.

The invention is based on the fact, that a voltage proportional to the derivative of the current is induced by the current pulse in the relevant wire portion s, between the upper- and the lower current feeder. Knowingly, a change in current through a straight wire will produce a magnetic field around the wire. Self-induction voltage is generated by magnetic field variations and is proportional to the derivative of the current pulse. Thus, as illustrated in the figures for the case of capacitive discharge pulse, the derivative of the current is steepest at the beginning and at the end of the pulse. Means, the induced voltage is at the maximum, exactly when the discharge current is at zero.

As said, figures 6a and 6b illustrate the two extreme cases of a top respectively a bottom discharge position. In case of a discharge occurring exactly at the midpoint between the upper- and the lower current (Fig 3b: Midpoint), the two partial wire segment lengths su and $s_L$, from the upper-, respectively the lower current feeder to the discharge location have the same length. The induced voltages $U_{CH1}$ and $U_{CH2}$ have the same value, and the voltage difference $\Delta U_{CH}$ of the measured channel voltages $U_{CH1}$ and $U_{CH2}$ is thus zero.

Notably, the current gradient di/dt of a wire electrical machining discharge pulse is large at the beginning and at the end of the pulse. Therefore, the voltage signal is very suitable for detection, also in the case of trim cutting, where conventional discharge position detection fails.

Now, coming back to figure 3a, 3b there is illustrated a preferred embodiment in which the first voltage $U_{ch1}$ and the second voltage $U_{ch2}$ are measured using measuring cables which are connected respectively at the upper- and at the lower current feeder. Preferably, the measuring cable 26 is directly connected to the upper current feeder 21 for the measurement of the channel voltage $U_{CH1}$, and a measuring cable 36 is directly connected to the lower current feeder 21 for the measurement of the channel voltage $U_{CH2}$.

For instance, channel voltages $U_{CH1}$ and $U_{CH2}$ are measured by means of voltage measurement means $V_1$ and $V_2$, outside of the machining area, e.g. in a cabinet 8. Thus, the current feeders are branched to the voltage measurement means $V_1$ and $V_2$ by means of measurement cables 26, 36. These cables are not the electrode cables 25, 35, that carry the high current machining discharge pulse.

A particular advantage of this method is that no particular changes to the electrode cables are required. These electrode cables can be used unchanged. During the measurement, only the voltage between the current feeder and the workpiece is measured. The gap voltage and the small voltage drop through the workpiece is eliminated by subtracting channel voltage 2 from channel voltage 1.

Moreover, in WEDM, the gap voltage is measured routinely for real time process monitoring and control. Preferably, the measuring cables 26, 36 for the measurement of the channel voltages $U_{CH1}$ and $U_{CH2}$ are the same used to measure the gap voltage, a.k.a. "reference cables", which carry a negligible current and have virtually no voltage drop, according to the principle of the Kelvin bridge. In this way, no additional cables are installed for the measurement of the channel voltages $U_{CH1}$ and $U_{CH2}$; complexity and costs are not needlessly increased. The workpiece side is typically at ground potential, as usual.

In summary, the invention poses no burden to the machining area of the WEDM; it is possible to implement the invention with no additional cables. However, dedicated measuring cables for the measurement of channel voltages $U_{CH1}$ and $U_{CH2}$ is also possible.

According to an embodiment, a machining process monitoring and control board includes the voltage measurement means $V_1$ and $V_2$, for the acquisition of the channel voltages $U_{CH1}$ and $U_{CH2}$. Such machining process monitoring and control board is routinely present in electrical discharge machines for real time process monitoring and control. Said e.g. printed circuit board may be mounted in a cabinet 8, further accommodating e.g. generator boards, power supplies, control unit, motor drives, etc.

The use of appropriate measuring cables and their proper connection are very important. Preferably, the measuring cables are coaxial cables or twisted pair cables, having a low resistance, inductance and capacitance. As an example, a specific inductance of 600 nH/m and capacitance of 28 pF/m will provide an accurate voltage signal. In this way, the measuring cables allow an accurate acquisition of the gap voltage.

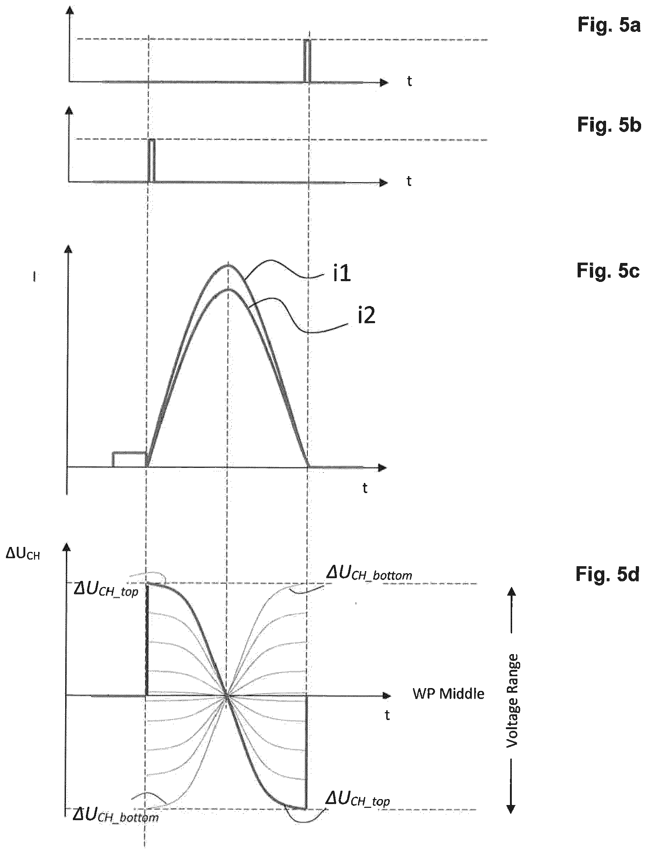

Figure 5c is a plot of the machining currents i1 and i2, which in this exemplary embodiment have the typical waveform of capacitive discharge pulses. However, the invention can be used with square, trapezoidal, and any other current waveform. In this example, the current i1 through the upper branch is higher than the current i2 through the lower branch, which means that the discharge position is closer to the upper current feeding point.

Figure 5d is a plot of the course of the difference $\Delta U_{CH}$ of measured voltages over time, for a plurality of discharges. The voltage curves are proportional to the difference of the pulse current differentials di/dt. The thick line illustrates the progression of the voltage difference $\Delta U_{CH}$ of a discharge occurring at the top of the workpiece. The thin lines are examples to show the course of the voltage difference $\Delta U_{CH}$ of discharges occurring at other positions along the engagement line of wire electrode and workpiece.

Figure 5a and 5b are current zero crossing signals, by which the voltage measurement is executed at the ideal moment. As discussed above, the channel voltages $U_{CH1}$ and $U_{CH2}$ are preferably measured at the beginning, or at the end of the discharge current pulse, when the current is zero and the current differentials di/dt are at the maximum. Particularly preferably, the channel voltages $U_{CH1}$ and $U_{CH2}$ are measured at the end of the discharge pulse, because here the noise is low compared with the noise at the beginning of the discharge pulse.

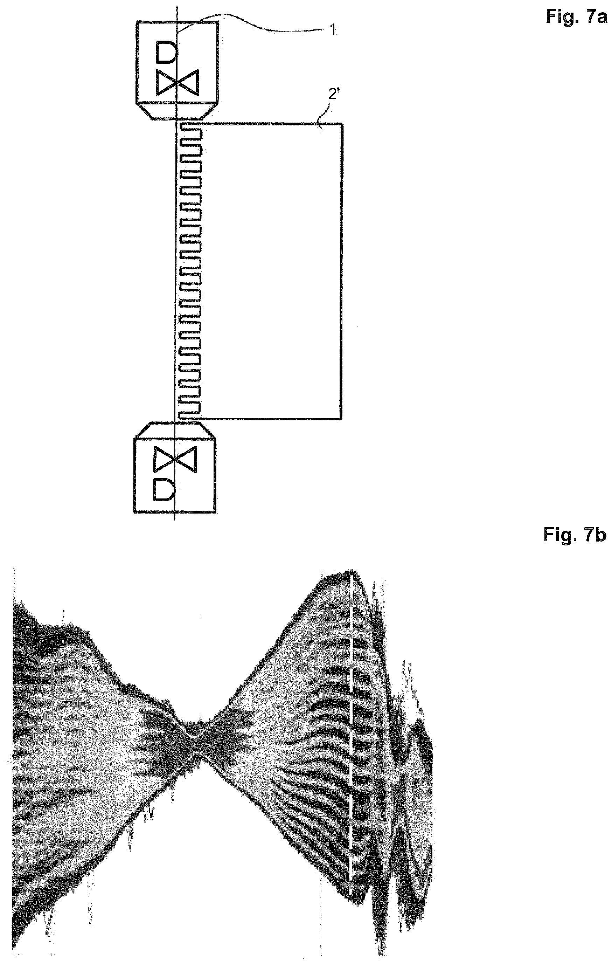

Figure 7a is a comb-shaped workpiece 2', which is processed over its entire height by means of the wire electrode 1. Figure 7b is a digital oscilloscope measurement of the voltage difference $\Delta U_{CH}$ over pulse time, which is captured in the course of the WEDM machining of the comb-shaped workpiece of figure 7a, by using the oscilloscope persistence display mode. The generated waveforms reflects the comb-shape of workpiece, and illustrates the relation between the discharge position and the voltage difference $\Delta U_{CH}$.

Referring to figure 9, the principle of signal acquisition and processing is now illustrated exemplarily:
The voltages $U_{CH1}$ and $U_{CH2}$ are acquired on the upper- and lower current feeders. Then a voltage divider and limiter circuit 51 scales down the measured voltages. Next, a fast operational amplifier 52 subtracts these voltages. This difference $\Delta U_{CH}$ is fed to a sample and hold circuit 53, that samples the voltages when the current zero crossing signal is active. The subtractor- and sample and hold circuit are not detailed further, since they are well known in the art.

Then the voltage signal is input to a fast A/D converter 54 and is discretized. Lastly, the output of the A/D converter is input to a FPGA (field programmable gate array) component 55. The FPGA is used for the further processing of the discharge positions, for simple monitoring purposes, such as e.g. the detection of concentrated subsequent discharges, or to actively control the position of a machining discharge pulse, for the application of an arbitrary discharge pattern to the workpiece cutting surface (see patent application EP21213367.2), or other introductorily mentioned "uses of the discharge position detection".

For practical use and further processing of the detected analogue discharge position, it is of advantage to discretize the discharge positions. To this purpose, in analogy to the method disclosed in EP3446820A, discretization is made by dividing the workpiece height $H_{WP}$ into a discrete number of $N_S$ distinct vertical sections S, e.g. starting from the lower edge of the workpiece (Z=0), and assigning the discharge position of each discharge to the respective vertical section. In the present example it is assumed, that the wire guide heads have symmetrical structure, i.e. the distance from the lower current feeder to the nozzle is the same for the upper wire guiding head 20 as for the lower wire guiding head 30.

Preferably, a lookup table is provided, indicating the vertical section S in which the discharge occurs for a voltage difference $\Delta U_{CH}$. The lookup table comprises data for each wire diameter used in the WEDM process.

According to a preferred embodiment, a discharge position is discretized by dividing a workpiece height $H_{WP}$ into a number $N_S$ of vertical sections S, and, with each discharge Di, determining the voltage difference $\Delta U_{CH}$, and then, based on said voltage difference $\Delta U_{CH}$, determining a discharge position $Z_{Di}$ of each discharge Di along an engagement line of a wire electrode and the workpiece, and lastly, assigning each discharge Di to a matching vertical section Sj of the workpiece based on the determined discharge position $Z_{Di}$ of each discharge.

The present invention now discloses how the exact location of the discharge is easily found by knowing the voltage difference $\Delta U_{CH}$. Referring to the symbols of figure 2:

$$Z_{Li} = H_{WP}/2 + k * \Delta U_{CH}$$

$$k = - H_{WP}/(2 * U_{max})$$

Where $\Delta U_{CH} = U_{max}$ is found, as illustrated by figure 10a, by slightly inclining the wire at an angle $\alpha$ (which wire length becomes now $S_{adj}$) and translating with the inclined wire against the workpiece to provoke a short circuit discharge at the top of the workpiece. The wire can also be inclined as illustrated in figure 10b to provoke a short circuit discharge at the bottom of the workpiece. In this way, it is possible to adjust the circuit symmetry.

In theory, the absolute values of $U_{max}$ found by inclining as per figures 10a and 10b should be identical. In this case $\Delta U_{CH} = 0$ would correspond to the exact middle of the workpiece height. However, a difference $\varepsilon = U_{max_{upper}} - U_{max_{lower}}$ can be used to slightly adjust the midpoint $H_{WP}/2$.

The wire inclination $\alpha$ for the detection of the top and bottom edges of the workpiece can be small, e.g. <2°, so that $H_{WP}$ and $S_{adj}$ are nearly same. However, very small wire inclination $\alpha$ produces less distinct discharge positions. To prevent this, larger wire inclination $\alpha$ may be adopted, and compensated by computing the length of the inclined wire, as follows:

$$H_{WP} = S_{adj} * \cos \alpha$$

As discussed above, the voltage difference $\Delta U_{CH}$ is proportional to the discharge position. The voltage difference $\Delta U_{CH}$ of a discharge occurring at the midpoint between the electrode feeders is zero. With a symmetrical constitution of the wire guide heads ($Z_{FU} = Z_{FL}$) and with flushing nozzles proximal to the workpiece surface, this midpoint corresponds to the midpoint of the workpiece height. The discharge position is referred e.g. to said midpoint, at half distance $Z_{FM}$ between the current feeders 21, 31. As said, the distance of the actual discharge from the midpoint between the current feeders is determined by the voltage difference $\Delta U_{CH}$. For instance, a positive value of $\Delta U_{CH}$ means that the discharge occurs between the midpoint and the top of the workpiece, a negative value of $\Delta U_{CH}$ means that the discharge occurs between the midpoint and the bottom of the workpiece.

The following is a simplified example (e.g. the nonlinearity of the wire electrode self-inductance is neglected) for the determination of the discharge position $Z_{Li}$ based on the difference of the channel voltages $U_{CH1}$ and $U_{CH2}$:
$H_{WP} - 100$ mm

(Let the zero coordinate of $Z_{Li}$ be at the workpiece bottom)

Wire diameter d = 0.2 mm
$U_{max} = 100V$; $U_{CH1} = 33.3$ V; $U_{CH2} = 66.6$ V

Discharge position $Z_{Li} = ?$

$$\Delta U_{CH} = U_{CH1} - U_{CH2} = -33.3 \text{ V}$$

$$k = - H_{WP}/(2 * Umax) = -0.5 \text{ mm/V}$$

$$Z_{Li} = H_{WP}/2 + k*dU = 50 + (-0.5)*(-33.3) = 66.6 \text{ mm}$$

As already mentioned above, the position detection system is calibrated, for instance by determining the voltage difference $\Delta U_{CH}$ measured with discharges occurring at the top- and/or bottom of the workpiece surface, whereby the such discharges can unequivocally be assigned to a specific vertical sections S.

Discharges occurring at the top- and/or bottom of the workpiece surface can be generated deliberately, e.g. by tilting the wire in cutting direction, as shown in figures 10a and 10b. Calibration can also be made taking advantage of the workpiece height information stored in the control unit.

Another calibration includes the processing of a comb-shaped workpiece, similar to the one shown in figure 7a, e.g. having a number of protrusion equivalent to the number of vertical sections S. The scale can be easily adjusted in process, by looking for the top- and bottom discharge positions of a distribution of a significant number of discharges.

If needed, the measure can be linearized, as illustrated by figure 11.

Referring now to figure 4b, there is shown a circuit model of a second embodiment, illustrating the current path between the generator of the WEDM and the wire electrode. Figure 4b is similar to figure 4a, but the lower electrode cable is not present or simply disconnected. In fact, the method according to the invention works also with a one sided supply.

The method applied to measure the first voltage $U_{CH1}$ and the second voltage $U_{CH2}$ of this second embodiment is similar to the one illustrated above with regard to the first embodiment, but now the formulas for $U_{CH1}$ and $U_{CH2}$ are as follows:

$$U_{CH1} = L_1 * di_1/dt + U_{Gap}$$

$U_{CH2} = U_{Gap}$ (since there flows no current past the partial wire segment $s_L$, between the discharge point and the lower current feeder)

The voltage difference is:

$$\Delta U_{CH} = U_{CH1} - U_{CH2} = L_1 * di_1/dt$$

The measure of $U_{CH2}$ serves only to determine and subtract the gap voltage $U_{Gap}$ from the formula.

The various applications of the discharge position detection known in the art, including the applications listed introductorily may use the improved method disclosed by the present invention, taking advantage of an improved accuracy, robustness, and its inexpensiveness.

Moreover, the inventive discharge position detection method may also be used in combination, i.e. "fusion" or plausibility check with known discharge position detection methods, e.g. the mentioned partial currents detection method, by workpiece height detection methods or, geometrical data about the workpiece and/or the machining program for instance taken from CAD/CAM data.

**Claims**

1. Wire electrical discharge machining (WEDM) method, in which a preliminary voltage pulse is applied to a gap between a wire electrode and a workpiece, and, at the breakdown of said preliminary voltage pulse, a machining discharge pulse is applied to the wire electrode, **characterized in that**,

   - a first voltage $U_{CH1}$ is measured, between a first current feeder and the workpiece, and that
   - a second voltage $U_{CH2}$ is measured, between a second current feeder and the workpiece,
   - whereas said first voltage $U_{CH1}$ and said second voltage $U_{CH2}$ are measured when current of the machining discharge pulse is zero,
   - a voltage difference of said first- and said second measured voltage $\Delta U_{CH} = U_{CH1} - U_{CH2}$ is determined, and
   - a discharge position of said machining discharge pulse is determined in real time, as a function of said voltage difference $\Delta U_{CH}$.

2. WEDM method according to claim 1, **characterized in that** the voltage is measured,

   - at the beginning of a machining discharge pulse, and/or
   - at the end of a machining discharge pulse.

3. WEDM method according to claim 1 or 2, **characterized in that** the determined voltage difference is a function of the wire segment inductance $L_1$ of the partial wire segment length su between the upper current feeder and the discharge position, and the wire segment inductance $L_2$ of the partial wire segment length $s_L$ between the lower current feeder and the discharge position.

4. WEDM method according to one of claims 1 to 3, **characterized in that** a discharge position is discretized by dividing a height $H_{WP}$ of the workpiece into a number $N_S$ of vertical sections S, and, with each discharge $D_i$,

   - determining the voltage difference $\Delta U_{CH}$,
   - based on said voltage difference $\Delta U_{CH}$, determining a discharge position $Z_{Di}$ of each discharge $D_i$ along an

engagement line of a wire electrode and the workpiece, and
- assigning each discharge Di to a matching vertical section $S_j$ of the workpiece based on the determined discharge position $Z_{Di}$ of each discharge.

5. WEDM method according to one of the preceding claims, **characterized in that** said first voltage $U_{ch1}$ and said second voltage $U_{ch2}$ are measured by a voltage measurement means $V_1$ and $V_2$, which is connected to the respectively at the upper- and lower current feeder by means of a measuring cable.

6. WEDM method according to claim 5, **characterized in that** said measurement cables are the gap voltage measurement cables.

7. WEDM method according to one of the preceding claims, **characterized in that** the machining discharge pulse is a capacitive discharge pulse.

8. WEDM method according to one of the preceding claims, **characterized in that** the determined discharge position $Z_{Di}$ is combined or compared with one or more other discharge position detection methods, including:

   - partial currents detection method,
   - a discharge frequency based workpiece height detection method,
   - geometrical data about the workpiece height stored in the control unit.

9. WEDM method according to one of the preceding claims, **characterized in that** a lookup table is provided for indicating the vertical section S in which the discharge occurs for a voltage difference $\Delta U_{CH}$, in particular, the lookup table comprises data for each wire diameter used in the WEDM process.

10. WEDM method according to one of the preceding claims, **characterized in that** a calibration step is conducted by determining the voltage difference $\Delta U_{CH}$ measured with discharges occurring at the top- and/or bottom of the workpiece surface.

11. A voltage measurement means for measuring the first voltage $U_{CH1}$ and the second voltage $U_{CH2}$ to determine the discharge position according to one of the previous claims.

12. The voltage measurement means includes an operation amplifier (52) for subtracting the measured voltages $U_{CH1}$ and $U_{CH2}$ and generating the difference voltage $\Delta U_{CH}$; a sample and hold circuit (53) for receiving the different voltages and sampling the voltages when the current zero crossing signal is active.

13. A wire electrical discharge machine for machining a workpiece by a wire electrode comprising:

   a table for mounting the workpiece thereon;
   an upper current feeder and an lower current feeder for carrying machining current pulses to the wire electrode for provoking an electrical discharge between the wire electrode and the workpiece; and
   a machining process monitoring and control board including the voltage measurement means according to claim 11.

14. The wire electrical discharge machine according to claim 13, wherein the machining process monitoring and control board is mounted in a cabinet (8) for accommodating generator boards and/or power supplies and/or a control unit and/or motor drives.

Fig. 1
PRIOR ART

Fig. 2
PRIOR ART

**Fig. 3a**

**Fig. 3b**

**Fig. 4a**

Upper electrode cable

$i_1$   $L_U$   $R_U$

7 — WEDM Generator

$i_0$

$i_2$   $L_l$   $R_L$

Lower electrode cable

1

$C_{PU}$   $U_{CH1}$

$R_{WU}$

$L_1$   $C_G$

$R_G$   2 — WP

$L_2$

$R_{WL}$

$C_{PL}$   $U_{CH2}$

**Fig. 4b**

Upper electrode cable

$i_1$   $L_U$   $R_U$

WEDM Generator

$i_0$

1

$C_{PU}$   $U_{CH1}$

$R_{WU}$

$L_1$   $C_G$

$R_G$   2 — WP

$L_2$

$R_{WL}$

$C_{PL}$   $U_{CH2}$

Fig. 5a

Fig. 5b

Fig. 5c

Fig. 5d

**Fig. 6a**

Bottom discharge

I  U

$\Delta U_{CH}$

I=0

**Fig. 6b**

Top discharge

U  I

$\Delta U_{CH}$

I=0

Fig. 7a

Fig. 7b

**Fig. 8**

**Fig. 9**

**Fig. 10a**　　　　　　　　　　　　　　　　　**Fig. 10b**

**Fig. 11**

Self-inductance, straight wire, diameter 0.2mm

$y = 1.3138x - 3.548$

| s [mm] | L [nH] |
|---|---|
| 0 | 0.0 |
| 1 | 0.4 |
| 2 | 1.1 |
| 3 | 1.9 |
| 4 | 2.7 |
| 5 | 3.6 |
| 6 | 4.5 |
| 7 | 5.5 |
| 8 | 6.5 |
| 9 | 7.5 |
| 10 | 8.6 |
| 20 | 20.0 |
| 30 | 32.4 |
| 40 | 45.5 |
| 50 | 59.1 |
| 60 | 73.1 |
| 70 | 87.4 |
| 80 | 102.0 |
| 90 | 116.9 |
| 100 | 132.0 |

# EUROPEAN SEARCH REPORT

Europäisches
Patentamt
European
Patent Office
Office européen
des brevets

Application Number

EP 21 21 7224

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI Y ET AL: "Research advancement on on-line detection of EDM spark locations", MEASUREMENT, INSTITUTE OF MEASUREMENT AND CONTROL. LONDON, GB, vol. 22, no. 1-2, 10 September 1997 (1997-09-10), pages 29-35, XP004123087, ISSN: 0263-2241, DOI: 10.1016/S0263-2241(97)00059-6 | 11,12 | INV. B23H7/04 |
| A | * paragraph [3.3.1] * ----- | 1-10 | |
| X | US 2010/133237 A1 (ONODERA YASUO [JP] ET AL) 3 June 2010 (2010-06-03) | 11-14 | |
| A | * paragraph [0065] * * paragraph [0071] * * paragraph [0106] * * paragraph [0116] * ----- | 1-10 | |

TECHNICAL FIELDS
SEARCHED        (IPC)

B23H

The present search report has been drawn up for all claims

| Place of search | Date of completion of the search | Examiner |
|---|---|---|
| The Hague | 22 June 2022 | Jaeger, Hein |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons
...............................................................................
& : member of the same patent family, corresponding
      document

EPO FORM 1503 03.82 (P04C01)

## ANNEX TO THE EUROPEAN SEARCH REPORT
## ON EUROPEAN PATENT APPLICATION NO.

EP 21 21 7224

This annex lists the patent family members relating to the patent documents cited in the above-mentioned European search report.
The members are as contained in the European Patent Office EDP file on
The European Patent Office is in no way liable for these particulars which are merely given for the purpose of information.

22-06-2022

| Patent document cited in search report | Publication date | Patent family member(s) | Publication date |
|---|---|---|---|
| US 2010133237 A1 | 03-06-2010 | NONE | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CH 653585 A5
- EP 3446820 A
- EP 3834977 A1
- EP 3446820 A1
- EP 21213367

**Non-patent literature cited in the description**

- The self and mutual inductances of linear conductors. **ROSA, E.B.** Bulletin of the Bureau of Standards. U.S. Bureau of Standards, 1908, vol. 4, 301